# EUROPÄISCHE PATENTSCHRIFT

(11) **EP 1 335 869 B1**
(45) Veröffentlichungstag und Bekanntmachung des Hinweises auf die Patenterteilung: **15.09.2004**
(21) Anmeldenummer: 01983572.7
(22) Anmeldetag: 31.10.2001
(51) Int. Cl.: B65G 33/26, B65G 33/14, E01C 19/20

(54) **STREUGERÄT**
DISPERSING APPLIANCE
APPAREIL D'EPANDAGE

(30) Priorität: 23.11.2000 DE 10058073
(43) Veröffentlichungstag der Anmeldung: 20.08.2003
(73) Patentinhaber: Schmidt Holding GmbH, 70794 Filderstadt-Bonlanden (DE)
(72) Erfinder: BRINKS, Albert, NL-7462 AP Rijssen (NL); BIJMA, Antonie, NL-7451 GM Holten (NL)
(74) Vertreter: Grättinger & Partner (GbR)
(86) Internationale Anmeldenummer: PCT/EP2001/012561
(87) Internationale Veröffentlichungsnummer: WO 2002/042184

(56) Entgegenhaltungen:
- WO-A-81/03320
- FR-A- 2 142 866
- JP-A- 61 060 511
- US-A- 455 384
- US-A- 4 496 086
- VETTER G ET AL: "ZUR AUSLEGUNG VON VERTIKALSCHNECKENDOSIERERN FUER DIE SCHUETTGUTABFUELLUNG" 1. September 1996 (1996-09-01) , WAGEN UND DOSIEREN, VERLAGSGESELLSCHAFT KEPPLER, MAINZ, DE, VOL. 27, NR. 5, PAGE(S) 5-14 , MAINZ, DE XP000627441 27 ISSN: 0342-5916 Seite 5, Spalte 2, Zeile 11 -Seite 8, Spalte 1, Zeile 4 Abbildungen 1-5

## Beschreibung

Die vorliegende Erfindung betrifft ein Streugerät mit einem Streustoffvorratsbehälter, einer im Bodenbereich des Streustoffvorratsbehälters angeordneten, motorisch angetriebenen Förderschnecke und einer von dieser gespeisten Streuvorrichtung, wobei die Förderschnecke einen Schneckenkern und ein Wendelelement, das den Schneckenkern mit Abstand schraubenförmig umgibt und mit diesem über Abstützelemente verbunden ist, umfaßt.

Streugeräte sind in den verschiedensten Ausführungen bekannt. Sie dienen insbesondere dem Ausbringen von Streustoff in Form von Split und/oder Salz auf Verkehrsflächen zur Glättebekämpfung. Zum einschlägigen Stand der Technik zählen beispielsweise die EP 0687776 A1, DE 1534421 A1, DE 2632794 C2, FR 2229812 A1, DE 2124416 A1 und DE 4038268 A1.

Bekannt ist des weiteren, daß bei Streugeräten, die hinsichtlich ihres grundsätzlichen Aufbaus dem Stand der Technik gemäß den vorstehend angegebenen Dokumenten entsprechen, das Wendelelement der Förderschnecke deren Schneckenkern mit Abstand umgibt und mit diesem über Abstützelemente verbunden ist (vgl. z.B. DE 3909868 C2, DE 3736865 A1, EP 0675231 B1, FR 2142866 A).

Bei Streugeräten sind je nach Ausführungsart zwei Problemkreise mehr oder weniger ausgeprägt. Zum einen neigen verschiedene Streustoffe dazu, sich im Bereich der Förderschnecke zu verfestigen, insbesondere bei Fahrten mit gefülltem Streustoffvorratsbehälter ohne Betrieb des Streugeräts; dies führt dazu, daß zum Andrehen der Förderschnecke extrem hohe Drehmomente erforderlich sind, so daß entsprechend große, schwere und teuere Motoren zum Antrieb der Förderschnecke vorzuhalten sind. Des weiteren ist bei konventioneller Geometrie der Förderschnecke eine Verlagerung des Schwerpunkts des Streugeräts während des Streueinsatzes zur Austragsseite hin zu beobachten. Da dies aus Gründen der Fahreigenschaften des Streufahrzeuges unerwünscht ist, sind verschiedene spezifische Geometrien der Förderschnecke (in Förderrichtung zunehmende Steigung des Wendelelements, in Förderrichtung zunehmender Durchmesser des Wendelelementes, in Förderrichtung abnehmender Durchmesser des Schneckenkerns) entwickelt worden, die zwar den Abzug des Streustoffes über der Schneckenlänge vergleichmäßigen und somit das Problem der Schwerpunktverlagerung entschärfen, die jedoch im allgemeinen mit einer Verteuerung der Herstellung der Förderschnecke verbunden sind.

Vor dem Hintergrund der vorstehend dargelegten, bei gattungsgemäßen bekannten Streugeräten mehr oder weniger ausgeprägten Nachteile liegt der vorliegenden Erfindung die Aufgabe zugrunde, ein Streugerät der eingangs genannten Art zu schaffen, dessen Förderschnecke zu ihrem Antrieb auch unter ungünstigen Bedingungen ein geringeres Drehmoment benötigt als Streugeräte nach dem Stand der Technik, wobei bevorzugt darüber hinaus mit einfachen Mitteln einer Schwerpunktverlagerung entgegengewirkt werden soll.

Gelöst wird diese Aufgabenstellung bei einem Streugerät der eingangs genannten Art dadurch, daß der axiale Abstand der Abstützelemente zueinander mindestens dem 1,25-fachen Wert der Steigung des Wendelelements und höchstens dem 3,75-fachen Wert der Steigung des Wendelelements entspricht. Von Bedeutung für das erfindungsgemäße Streugerät ist somit insbesondere, daß das Wendelelement nicht durchgängig oder quasi durchgängig fest mit dem Schneckenkern verbunden ist, sondern daß vielmehr die Verbindung des Wendelelements mit dem Schneckenkern über einzelne diskrete Abstützelemente erfolgt, wobei die Abstützelemente einen Abstand, der mindestens dem 1,25-fachen und höchstens dem 3,75-fachen Wert der Steigung des Wendelelements entspricht, zueinander einhalten. In Verbindung mit dem weiteren für das erfindungsgemäße Streugerät wesentliche Merkmal, wonach das Wendelelement einen Abstand zum Schneckenkern einhält, d. h. nicht an diesem anliegt, ermöglicht dies bei entsprechender Dimensionierung des Wendelelements eine solche elastische Nachgiebigkeit des letzteren, daß dieses sich insbesondere im Bereich von Streustoffverfestigungen derart elastisch verformen kann, daß das Aufbrechen örtlicher Streustoffverfestigungen zur vollständigen oder weitestgehenden Wiederherstellung der Rieselfähigkeit begünstigt wird. Der erfindungsgemäße Abstand der Abstützelemente zueinander stellt dabei sicher, daß auch solche Wendelelemente, die eine im Hinblick auf die Förderung herkömmlicher Streumaterialien (insbesondere Salz und Splitt gebräuchlicher Körnung) optimierte Querschnittsfläche und -form aufweisen, so nachgiebig sind, daß das Aufbrechen von Streustoffverfestigungen begünstigt wird. Zudem ermöglicht der Abstand, den das Wendelelement zum Schneckenkern einhält, daß das Wendelelement bei Verstopfung der Förderzone durch eine noch nicht aufgebrochene Streustoffverfestigung in dem stromaufwärts der Verfestigung angeordneten Bereich durchdreht, d. h. nicht Streustoff gegen die noch nicht aufgebrochene Verfestigung fördert. Auf diese Weise steht ein größtmöglicher Anteil des in die Förderschnecke eingeleiteten Drehmoments zum Aufbrechen möglicher Verfestigungen zur Verfügung. Dementsprechend können zum Antrieb der Förderschnecke kostengünstigere, leichtere und schwächere Antriebsmotoren vorgehalten werden, als dies bei gattungsgemäßen Streugeräten bekannter Bauart der Fall ist.

Des weiteren hat sich gezeigt, daß bei Ausführung der Förderschnecke gemäß der vorliegenden Erfindung auch das Problem der Schwerpunktverlagerung maßgeblich entschärft wird. Trotz des vergleichsweise einfachen, mit relativ geringen Herstellkosten verbundenen Aufbaus der erfindungsgemäßen Förderschnecke ist bei mit dieser ausgerüsteten Streugeräten eine deutlich reduzierte Tendenz zum ungleichförmigen Abzug des Streustoffes aus dem Streustoffvorratsbehälter zu beobachten, als bei bekannten Streugeräten mit konventionellen Förderschnecken. Bei erfindungsgemäßen Streugeräten erfolgt ein vergleichsweise gleichmäßiger Abzug des Streustoffes aus dem Streustoffvorratsbehälter über die gesamte Länge der Förderschnecke, so wie dies sich bisher allein mit teuren Förderschnecken mit spezieller Geometrie erreichen ließ. Bei erfindungsgemäßen Streugeräten läßt sich sogar eine Vergleichmäßigung der Verteilung des Streustoffes in dem Streustoffvorratsbehälter nach einer zuvor künstlich hergestellten ungleichmäßigen Verteilung beobachten.

Eine erste bevorzugte Weiterbildung der Erfindung zeichnet sich dadurch aus, daß das Wendelelement aus Federdraht besteht. Die hervorragenden elastischen Eigenschaften dieses Werkstoffs begünstigen die vorstehend dargelegten Effekte insbesondere im Zusammenhang mit dem Aufbrechen von Streustoffverfestigungen, um die Rieselfähigkeit wieder herzustellen. Der Federdraht kann dabei insbesondere einen kreisförmigen Querschnitt aufweisen. Zwingend ist dies jedoch in keiner Weise. Vielmehr kommt beispielsweise auch ein quadratischer oder flacher Rechteck-Querschnitt in Betracht.

Besonders bevorzugte Abstände der einzelnen Abstützelemente zueinander sind dabei im Hinblick auf eine günstige Formbeständigkeit des Wendelelements in seitlicher Richtung der 1,33-fache und der 1,66-fache Wert der Steigung des Wendelelements. Dies führt zu einer sehr guten Abstützung des Wendelelements an dem Schneckenkern in radialer Richtung, das heißt einer mäßigen, den angestrebten Erfolg begüngstigenden Nachgiebigkeit des Wendelelements in radialer Richtung. Bei entsprechend größerem Querschnitt des Wendelelements und einer hierdurch bedingten größeren Steifigkeit sind beispielsweise auch der 2,33-fache und der 2,66-fache Wert der Steigung des Wendelelements als axialer Abstand der Abstützelemente zueinander sehr günstig.

Im Rahmen der vorliegenden Erfindung können die Abstützelemente starr ausgeführt sein, beispielsweise in Form von - unter normalen Betriebsbedingungen - starren radialen Speichen. Besonders bevorzugt ist indessen, wenn die Abstützelemente in radialer und/oder tangentialer Richtung elastisch nachgiebig ausgeführt sind. Beispielsweise können die Abstützelemente jeweils aus zwei Rohrabschnitten bestehen, von denen der eine in dem anderen teleskopisch verschiebbar geführt und mittels eines Federelements elastisch nachgiebig abgestützt ist. Auch können die Abstützelemente im Hinblick auf eine radiale und tangentiale Nachgiebigkeit gekrümmt ausgeführt sein. Die entsprechende radial und/oder tangential elastisch nachgiebige Ausführung der Abstützelemente läßt eine quer zur Längsachse der Förderschnecke gerichtete elastische Nachgiebigkeit des Wendelelements zu, die auch das Aufbrechen von Streustoffverfestigungen begünstigt und sich somit ebenfalls günstig auf das Betriebsverhalten des Streugeräts auswirkt.

Eine andere bevorzugte Weiterbildung der Erfindung zeichnet sich dadurch aus, daß der radiale Abstand des Wendelelements zum Schneckenkern mindestens dem Radius des Schneckenkerns entspricht. Im Falle dieser Dimensionierung ergibt sich bei durchschnittlichen Verhältnissen ein besonders günstiges Verhältnis zwischen der Förderung des Streustoffes im normalen Betrieb und der Möglichkeit, daß die Förderschnecke bei Vorliegen einer Streustoffverfestigung durchdreht.

Da die spezifische Gestaltung der Förderschnecke bei dem erfindungsgemäßen Steugerät bereits dem Problem der Schwerpunktverlagerung entgegenwirkt, wird das Wendelelement im Hinblick auf geringe Herstellkosten im allgemeinen über seine Länge eine konstante Steigung und einen konstanten Querschnitt aufweisen. Dies ist jedoch keineswegs zwingend. Vielmehr können im Rahmen der vorliegenden Erfindung auch Wendelelemente zum Einsatz kommen, deren Steigung und/oder Querschnitt sich über die Länge der Förderschnecke ändert. Die Bestimmung des Abstandes der Abstützelemente zueinander richtet sich in diesem Falle nach der durchschnittlichen Steigung des Wendelelements zwischen den beiden betreffenden Abstützelementen. Bei über die Länge der Förderschnecke zunehmender Steigung des Wendelelements vergrößert sich auch dementsprechend der Abstand zwischen jeweils zwei zueinander benachbarten Abstützelementen.

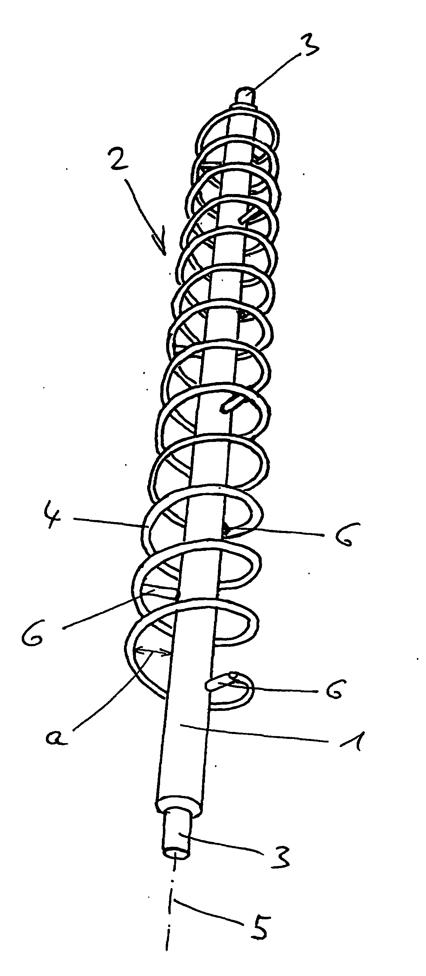

Im folgenden wird die vorliegende Erfindung anhand eines in der Zeichnung veranschaulichten bevorzugten Ausführungsbeispiels näher erläutert. Dabei zeigt die Zeichnung in perspektivischer Ansicht eine Förderschnecke, wie sie in einem Streugerät nach der vorliegenden Erfindung zum Einsatz gelangen kann.

Die in der Zeichnung veranschaulichte Förderschnecke eignet sich zum Einsatz in Streugeräten, die hinsichtlich ihrer übrigen Merkmale gemäß dem hinlänglich bekannten Stand der Technik (siehe oben) ausgeführt sind. Es wird daher an dieser Stelle auf eine Beschreibung des Streugeräts als solches verzichtet.

Die Förderschnecke umfaßt einen zylindrischen Schneckenkern 1 und ein diesen umgebendes Wendelelement 2. Der Schneckenkern 1 weist endseitig jeweils einen Lagerzapfen 3 auf. Darüber hinaus ist eines beiden Enden der Förderschnecke in als solches bekannter Weise zum Anschluß an einen Antriebsmotor vorbereitet.

Das Wendelelement 2 ist gebildet durch einen schraubenfederförmig gewendelten Runddraht 4 aus Federstahl. Es umgibt den Schneckenkern 1 koaxial zu dessen Achse 5.

Der Runddraht 4 hält dabei allseits einen radialen Abstand a vom Schneckenkern 1 in der Größenordnung des Durchmessers des Schneckenkerns ein.

Der schraubenfederförmig gewendelte Runddraht 4 stützt sich an dem Schneckenkern 1 über dessen Länge mittels neun Abstützelementen 6 ab, die den genannten radialen Abstand des Wendelelements 2 zum Schneckenkern 1 gewährleisten. Die Abstützelemente 6 sind radial ausgerichtet. Der axiale Abstand zwischen zwei benachbarten Abstützelementen 6 beträgt den 1,66-fachen Wert der Steigung des Wendelelements 2. Hieraus ergibt sich, daß die speichenförmig radial nach außen gerichteten Abstützelemente 6 in drei verschiedenen, jeweils um 120° zueinander ausgerichteten Ebenen angeordnet sind.

## Patentansprüche

1. Streugerät mit einem Streustoffvorratsbehälter, einer im Bodenbereich des Streustoffvorratsbehälters angeordneten, motorisch angetriebenen Förderschnecke und einer von dieser gespeisten Streuvorrichtung, wobei die Förderschnecke einen Schneckenkern (1) und ein Wendelelement (2), das den Schneckenkern mit Abstand schraubenförmig umgibt und mit diesem über Abstützelemente (6) verbunden ist, umfaßt,
**dadurch gekennzeichnet,**
**daß** der axiale Abstand der Abstützelemente (6) zueinander mindestens dem 1,25-fachen und höchstens dem 3,75-fachen Wert der Steigung des Wendelelements (2) entspricht.

2. Streugerät nach Anspruch 1,
**dadurch gekennzeichnet,**
**daß** das Wendelelement (2) aus einem schraubenfederförmig gewendelten Federdraht (4) besteht.

3. Streugerät nach Anspruch 1 oder Anspruch 2,
**dadurch gekennzeichnet,**
**daß** der radiale Abstand (a) des Wendelelements (2) zum Schneckenkern (1) mindestens dem Radius des Schneckenkerns entspricht.

4. Streugerät nach einem der Ansprüche 1 bis 3,
**dadurch gekennzeichnet,**
**daß** die Abstützelemente (6) im wesentlichen radial ausgerichtet sind.

5. Streugerät nach einem der Ansprüche 1 bis 4,
**dadurch gekennzeichnet,**
**daß** die Abstützelemente (6) radial und/oder tangential elastisch nachgiebig ausgeführt sind.

## Claims

1. A dispersing appliance with a dispersion-material storage container, a motor-driven conveyor worm arranged in the bottom area of the dispersion-material storage container and a dispersing device fed by the latter, whereby the conveyor worm includes a worm core (1) and a coil element (2), which surrounds the worm core at a distance in a helical form and is connected with the latter via support elements (6),
**characterised in that**
the axial distance of the support elements (6) from one another corresponds to at least 1.25 times and at most 3.75 times the value of the pitch of the coil element (2).

2. The dispersing appliance according to claim 1,
**characterised in that**
the coil element (2) consists of a spring wire (4) coiled in the form of a helical spring.

3. The dispersing appliance according to claim 1 or claim 2,
**characterised in that**
the radial distance (a) of the coil element (2) from the worm core (1) corresponds to at least the radius of the worm core.

4. The dispersing appliance according to any one of claims 1 to 3,
**characterised in that**
the support elements (6) are aligned essentially radially.

5. The dispersing appliance according to any one of claims 1 to 4,
**characterised in that**
the support elements (6) are designed so as to be elastically flexible radially and/or tangentially.

## Revendications

1. Appareil d'épandage comportant un conteneur à produit d'épandage, une vis transporteuse qui est disposée dans la région du fond du conteneur à produit d'épandage et est entraînée mécaniquement ainsi qu'un dispositif d'épandage qui est alimenté par la vis transporteuse, la vis transporteuse comprenant un noyau de vis (1) et un élément hélicoïdal (2) qui entoure à distance, en formant une hélice, le noyau de vis et est lié au noyau de vis par des éléments de support (6), **caractérisé par le fait que** l'espacement axial mutuel des éléments de support (6) correspond au moins à 1,25 fois et au plus à 3,75 fois la valeur du pas de l'élément hélicoïdal (2).

2. Appareil d'épandage selon la revendication 1, **caractérisé par le fait que** l'élément hélicoïdal (2) est formé d'un fil à ressort (4) enroulé à la manière d'un ressort hélicoïdal.

3. Appareil d'épandage selon la revendication 1 ou 2, **caractérisé par le fait que** la distance radiale (a) de l'élément hélicoïdal (2) au noyau de vis (1) correspond au moins au rayon du noyau de vis.

4. Appareil d'épandage selon une des revendications 1 à 3, **caractérisé par le fait que** les éléments de support (6) sont disposés essentiellement dans la direction radiale

5. Appareil d'épandage selon une des revendications 1 à 4, **caractérisé par le fait que** les éléments de support (6) sont flexibles dans la direction radiale et/ou la direction tangentielle.
